Europäisches Patentamt

European Patent Office

Office européen des brevets

(11) Publication number: **0 198 949**
**B1**

## EUROPEAN PATENT SPECIFICATION

(45) Date of publication of patent specification: **11.07.90**

(21) Application number: **85112217.6**

(22) Date of filing: **26.09.85**

(51) Int. Cl.⁵: **A 62 D 3/00**

(54) A proces and installation for destroying hazardous wastes.

(30) Priority: **22.03.85 US 714783**

(43) Date of publication of application:
**29.10.86 Bulletin 86/44**

(45) Publication of the grant of the patent:
**11.07.90 Bulletin 90/28**

�széDesignatedContracting States:
**AT BE CH DE FR GB IT LI LU NL SE**

(56) References cited:
**US-A-3 845 190**
**US-A-3 890 908**
**US-A-4 469 661**
**US-A-4 552 667**

**CHEMICAL ABSTRACTS, vol. 80, no. 2, 14th
January 1974, page 225, abstract no. 6692a,
Columbus, Ohio, US; & JP - A - 73 72 076
(KOKUSAI DENKO CO., LTD.) 28-09-1973**

**The file contains technical information
submitted after the application was filed and
not included in this specification**

(73) Proprietor: **Shultz, Clifford G.**
**1701 Glendale**
**Evansville Indiana 47712 (US)**

(72) Inventor: **Shultz, Clifford G.**
**1701 Glendale**
**Evansville Indiana 47712 (US)**

(74) Representative: **Munk, Ludwig, Dipl.-Ing.**
**Patentanwalt Prinzregentenstrasse 1**
**D-8900 Augsburg (DE)**

(56) References cited:
**CHEMICAL ABSTRACTS, vol. 99, no. 10, 5th
September 1983, page 325, abstract no.
76213m, Columbus, Ohio, US; G. LUNN et al.:
"Safe disposal of carcinogenic nitrosamines", &
CARCINOGENESIS (LONDON), 1983, 4(3), 315-
19**

**CHEMICAL ABSTRACTS, vol. 85, no. 12, 20th
September 1976, page 324, abstract no. 82963h,
Columbus, Ohio, US; & JP - A - 76 25 471 (ARITA
RESEARCH INSTITUTE CO., LTD) 02-03-1976**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is directed to a process and installation for destroying hazardous wastes containing hazardous organic compounds which contain at least one covalently bound element selected from the group consisting of oxygen, nitrogen, sulfur, and/or phosphorus.

Many hazardous wastes have been disposed of improperly during the years since the chemical age began. Some of these resulted from incomplete reactions at chemical manufacturing plants; others wre isomeric or side-reaction products which were not suitable for use. Still others are compounds which had been manufactured and in use, but had been discovered to present a real or potential hazard to workers in the plant manufacturing them or to their users, or to people exposed to them. Little notice was payed these discarded materials until recently, when the magnitude of their quantity has made it a problem which can no longer be ignored. Many were buried in improperly secured landfills; some in open dumps; some simply left standing in drums; some dumped on the ground.

Some companies early in the "waste management" business charged generators for disposing of their wastes, and merely stockpiled them without making any attempt to effect a proper, environmentally safe treatment or disposal. Thousands of these dumps are known to exist, and much attention is being given to methods of containment or disposal of their contents. More recently, much effort has gone into devising processes for their destruction or dispoqal.

Methods for their disposal include: secured landfills; incineration in lime or cement kilns; incineration in specially constructed incinerators designed to retain the combustion gases for long periods of time in order to insure complete oxidation; oxidation in molten salt baths which utilise the molten salt to retain the combustion products and maintain the high temperature necessary. Recently adopted processes involve reaction of polychlorinated biphenyls (PCBs) with a sodium alkyl, a process which has been in use for a long time as an analytical tool. This is a reductive process in which the sodium in the sodium alkyl abstracts the chlorine from the PCB molecule. This can result in addition of the alkyl to biphenyl ring structure, or it may be done in a medium which can supply substituents to the fragment.

Sodium metal has also been applied to the analytical determination of organically bound halogen; reducing the covalently bound halogen and forming the negative halide ion.

It further has been suggested to reduce polychlorinated biphenyls by producing a solution of same in an organic solvent of a vaporizing temperature, vaporizing this solution and contacting same with molten aluminum by bubbling such solution vapor through a bath of molten aluminum. This method has provded rather expensive with regard to the installation costs as well as the energy consumption and other running costs and is not workable for hazardous wastes containing other hazardous organic compounds.

In this field of disposal of non-hazardous wastes as e.g. household wastes such as waste food and empty plastic containers, better known as "garbage" or "rubbish", containing organic compounds likewise, it is known to decompose such waste material by pyrolysis, i.e. transformation by heat alone under air-tight conditions.

For this purpose US—A—3 890 908 suggests that the waste material to be decomposed were fed into a bath of high temperature organic or at least one molten metal such as iron or lead or molten glass, the waste material to be decomposed being caused to drift freely through such molten substance in up direction towards the surface of such molten substance.

The JP—A—7 372 076 pertains to the decomposition of such household wastes and herefor suggests compressing such waste material into blocks and submerging same into molten aluminum where they are pyrolyzed under air-tight conditions to decompose into elements such as C, H, O, N, S and Cl. The elements except for C, H and N are said to react with the melt to form slag. Released hydrogen is said to react with outside air at the surface of the melt to become water. Cl is said to be solidified into $AlCl_3$

Such methods known for the decomposition of household wastes or the like have been found unuseful for the disposal of hazardous waste containing covalently bound other elements such as O, N, S and/or P. Such hazardous compounds containing said elements hitherto have not been able to be decomposed effectively without putting up with hazardous or toxic decomposition products.

Starting from these facts it is the objective of the invention to make available a simple, economic and safe process and installation for destroying hazardous wastes containing hazardous organic compounds which contain covalently bound element selected from the group consisting of oxygen, nitrogen, sulfur and/or phosphorus, said process being workable under any scale, even under industrial wide scale conditions.

The solution according to the invention utilizes molten metallic aluminum to react with the covalently bound oxygen, nitrogen, sulfur and/or phosphorus in hazardous organic compounds containing these to reduce the compounds, for example to form ionic inorganic salts or oxides, causing the organic residues to become dehydrated, combined or rearranged into innocuous gaseous compounds. Accordingly the process according to the invention is characterized by contacting such hazardous organic compound as mentioned with molten aluminum to react with the covalently bound element to reduce the compounds thereby destroying the compounds and forming less hazardous product.

The installation for the performance of the process according to the invention is characterized by a solid waste receiving hopper, a horizontal screw conveyor connecting the receiving hopper with a feed hopper, a reactor containing a bath of molten aluminum, a vertical screw conveyer feeding the waste downward through an open tube which has its terminus near the bottom of the reactor, a liquid waste storage tank connected with the reactor by a pipe charged by a pump and introduced in the reactor and having there apertures, a water trap the bottomside of which is connected with the head region of the reactor by a pipe and the head region of which is connected to an outlet leading to a fire screen and/or a pressure tank preferably charged by a compressor.

Preferred embodiments of the process are outlined in the sub-claims

Hazardous compounds containing covalently bound oxygen which are treatable in the process herein include, for example, alcohols, aldehydes, ketones, carboxylic acids, esters and ethers. By such treatment, the compounds are reduced to unsaturated hydrocarbons, hydrogen and carbon; the aluminum becomes oxidised to aluminumoxide. Such compounds include:

3-(alpha-Acetonylbenzyl)-4-hydroxicoumarin and salts
Acrolein
Allyl alcohol
Bis(chloromethyl) ether
Bromoacetone
2-Butanoneperoxide
Chloroacetaldehyde
Endrine
Fluoroacetic acid, sodium salt
1,2,3,4,10,10-Hexachloro-1,4,4a,5,8,8a-hexahydro-
    1,4,5,8-endo, endo-dimethanonaphthalene
Dimethoate
Methomyl
Oleyl alcohol condensed with 2 moled ethylene oxide
7-Oxabicyclo (2,2,1)heptane-2,3-dicarboxylic acid
Pentachlorophenol
Phenylmercury acetate
Phosgene
1,2-Propanediol
2 Propyn-1-01
Acetone
Acetyl chloride
Acrylic acid
Bis (2-chlorethoxyl) methane
Acetone
Bis (2-chloroethyl) ether
Bis (2-chloroisopropyl) ether
Bis (2-ethylhexyl) phthalate
4-Bromophenyl phenyl ether
n-Butyl alcohol
Carbonyl fluoride
Chloral
Chlordane
Chlorobenzilate
p-Chloro-m-cresol
1-Chloro-2,3-epoxypropane
Chlorethyl vinyl ether
Cresols
Crotonaldehyde
Cresylic acid
Cyclohexanone
Di-n-butyl phthalate
2,4-Dichlorophenol
2,6-Dichlorophenol
Diepoxybutane
Diethyl phthalate
Diethylstilbestrol
Dihydrosafrole
Alpha, alpha-dimethylbenzylhydroperoxide
2,4-Dimethylphenol
Dimethyl phthalate
Di-n-octyl phthalate
1,4-Dioxane
Ethyl acetate

Ethyl acrylate
Ethylene oxide
Ethyl ether
Ethylmethacrylate
Formaldehyde
Formic acid
Furan
Furfural
Glycidylaldehyde
Hexachlorophene
Hydroxydimethyl arsine oxide
Iron Dextran
Isobutyl alcohol
Isosafrole
Kepone
Maleic anhydride
Methanol
Methyl chlorocarbonate
Methyl ethyl ketone
Methyl ethyl ketone peroxide
Methyl isobutyl ketone
Methyl methacrylate
1,4-Naphthoquinone
Oxalic acid
Paraldehyde
Phenol
Phthalic anhydride
Quinones
Resorcinol
Safrole
2,3,4,6-Tetrachlorophenol
Tetrahydrofuran
Toxaphene 2,3,5-TP
2,4,5-Trichlorophenol
2,4,6-Trichlorophenol
2,4,5-Trichlorophenoxyacetic acid
2,4,5-Trichlorophenoxy propionic acid

Hazardous compounds containing covalently bound nitrogen which are treatable by the process herein include, for example, amines and nitriles (cyanides). In the treatment herein, these are reduced to hydrocarbons, hydrogen, nitrogen and carbon, while the aluminum is converted to the nitride. Such compounds include:

4-Aminopyridine
p-Chloroaniline
3-Chloropropionitrile
Cyanogen
Cyanogen bromide
Cyanogen chloride
Alpha, alpha-dimethylphenethylamine
Ethylcyanide
Ethylenediamine
Ethyleneimine
Hydrocyanic acid
2-Methylaziridine
Methyl hydrazine
2-Methyllactonitrile
Nicotine and salts
Propionitrile
Acetonitrile
Acetylaminofluorene
Acrylonitrile
Amitrole
Aniline
Auramine

4

Benz(c)acridine
N,N-Bis (2-chloroethyl)-2-naphthylamine
3,3-Dichlorobenzidine
1,2-Diethylhydrazine
Dimethylamine
p-Dimethylaminoazobenzene
3,3-Dimethylbenzidine
1,2-Diethylhydrazine
Dipropylamine
Maleic hydrazide
Malononitrile
Melphalan
Methacrylonitrile
4,4-Methylene-bis-(2-chloroaniline)
1,4-Naphthylamine
2-Naphthylamine
2-Picoline
n-Propylamine
Pyridine
Toluenediamine
Toluidine hydrochloride

Hazardous organic compounds containing covalently bound sulfur which are treatable by the process herein include sulfides, thiols, thiocarbonyls, thioketones and mercaptans. In the treatment herein, these are reduced to hydrocarbons, carbon and hydrogen while the aluminum is oxidized to the sulfide. These comounds include:

Thiocarbonyl chloride
Carbon disulfide
Thioacetone trimer
Methyl mercaptan
Endosulfan
Trichloromethanethiol

Hazardous organic wastes containing covalently bound phosphorous which are treatable by the process herein include, for example, phosphines, e.g. methyl phosphine. Treatment herein results in formation of hydrocarbons, hydrogen and carbon while aluminum phosphide is formed.
The hazardous organic compounds containing both covalently bound oxygen and covalently bound nitrogen which are treatable by the process herein include, for example, nitro and nitroso compounds, amides, oximes, amino alcohols, and amino acids. By the treatment herein such compounds are reduced to hydrocarbons, hydrogen, nitrogen and carbon, while the aluminum is converted to oxide and nitride. Such compounds include:

5-(Aminomethyl)-3-isoxazolol
Ammonium picrate
Brucine
2-Sec-Butyl-4,6-dinitrophenol
1-(p-Chlorobenzoyl)-5-methoxy-methylindole-3-acetic acid
Dieldrin
4,6-Dinitro-o-cresol and salts
2,4-Dinitrophenol
2-Fluoroacetamide
Isocyanic acid, methyl ester
2-Methyl-2-(methylthio)propionaldehyde-o-(methylcarbonyl) oxime
N-Methyl-N-nitro-N-nitrosoguanidine
p-Nitroaniline
Nitrobenzene
Nitroglycerine
N-Nitrosodimethylamine
N-Nitrosodiphenylamine
N-Nitrosomethylvinylamine
6-Amino-1,1a,2,8,8a,8b-hexahydro-8-(hydroxymethyl)-8-methoxy-5-methylcarbamate
   azirino (2', 3', 3, 4) pyrrolo(1,2-a) indole-4,7-dione(ester)
Azaserine
Chlorambucil

Daunomycin
3,3-Dimethylbenzidine
Dimethylcarbamoyl chloride
Dimethylnitrosamine
2,4-Dinitrotoluene
2,6-Dinitrotoluene
Di-n-propylnitrosamine
Maleic hydrazide
4-Nitrophenol
2-Nitropropane
N-Nitrosodi-n-butylamine
N-Nitrosodiethanolamine
N-Nitrosodiethylamine
N-Nitrosodi-n-propylamine
N-Nitroso-n-ethylurea
N-Nitroso-n-methylurea
N-Nitroso-n-methylurethane
N-Nitrosopiperidine
N-Nitrosopyrrolidine
5-Nitro-o-toluidine
Pentachloronitrobenzene
Phenacetin
Pronamide
Reserpine
Saccharin
Streptozoticin
Toluene diisocyanate
Trinitrobenzene
Uracil mustard
Urethane

Hazardous organic compounds containing both covalently bound oxygen and covaletly bound sulfur which are treatable by the process herein include, for example, sulfonic acids, sulfonates, thiols and sulfones. In the treatment herein, these are converted to hydrocarbons, carbon and hydrogen and the aluminum is oxidized to oxide and sulfide.
Such compounds include:

Benzenethiol
Dimethyl sulfate
Dodecylbenzene sulfonic acid
Endosulfan
Ethyl methanesulfonate
1,3-Propane sulfone

Hazardous organic compounds containing both covalently bound oxygen and covalently bound posphorus which are treatable by the process herein include, for example, phosphates, phosphonates and phosphine oxides. By the treatment by the process herein, these are reduced to hydrocarbons, carbon and hydrogen and the aluminum is oxidized to oxide and phosphide. Such compounds include:

Hexaethyl tetraphosphate
Methylene diphosphonate
Tetraethylpyrophosphate
Tris-(2,3-dibromopropyl) phosphate

Hazardous organic wastes containing both covalenly bound nitrogen and covalently bound sulfur which are treatable by the process herein include, for example, thioamides, and aminothiols. These react in the process herein to form hydrocarbons, hydrogen carbons and nitrogen while the aluminum forms nitride and sulfide. Compounds of this type are:

1-(o-Chlorophenyl)thiourea
2,4-Dithiobiuret
Ethylene bis dithiocarbamate
Ethylene thiourea
Methyl pyrilene
Methyl thiouracil

6

1-Naphthyl-2-thiourea
N-Phenylthiourea
Thioacetamide
Thiosemicarbazide
Thiourea
Thiouram
Trichloromethanethiol

Hazardous organic wastes containing oxygen and nitrogen and sulfur; oxygen and phosphorus and sulfur; oxyven and nitrogen and phosphorus, those containing all four; including those which additionally contain halogen; react with molten aluminum to either carbonize or degrade the compound into simpler hydrocarbons or hydrogen and carbon. The aluminum reactant forms the appropriate salt or salts. Hazardous organic wastes having more than two of these elements as substituents are as follows:

1-Acetyl-2-thourea
Diallate
Dimethoate
Ethylenebisdithiocarbamate
Methylthiouracil
Trypan blue
O,O-Diethyl-S-(2-(ethylthio)ethyl)ester of phosphorothioic acid
Phorate
Tetraethyldithiopyrophosphate
O,O-Diethyl-S-methyl ester of phosphorodithioic acid
Octamethylpyrophosphoramide
3,3-Dimethyl-1-(methylthio)-2-butanone-O-(methylamino) carbonyl oxime
Methyl parathion
Parathion

As indicated above the hazardous organic compounds treated herein sometimes additionally contain halogen, e.g. chlorine, bromine, iodine or fluorine.

The use of molten aluminum fmr hazardous waste destruction combines the strong reducing power of this active metal with the naturally destructive tendency of heat.

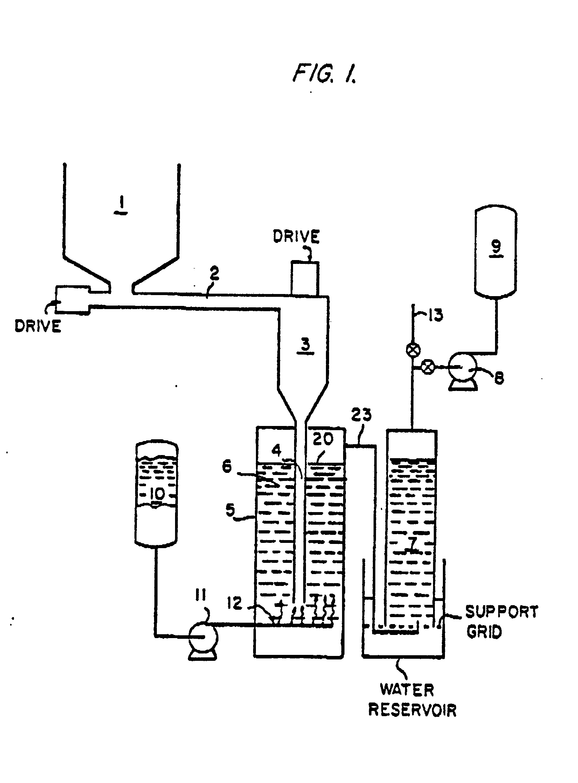

A presently preferred process and installation for carrying out the invention are schematically illustrated in Fig. 1 and comprise the following:

Incoming solid hazardous wastes are placed in a receiving hopper 1, which is covered and sealed when not being loaded. The waste is then conveyed by a horizontal screw conveyor 2 to a feed hopper 3. A vertical screw conveyor 4 feeds the waste downward through an open tube which has its terminus near the bottom of a reactor 5 into the bath of molten aluminum 6 with the upper surface of both being benoted by reference numeral 20. Vapors rising from the reaction zones pass into a water trap 7 via pipe 23 and then are compressed by compressor 8 and stored for fuel in pressure tank 9, or else are flared to the atmosphere through a fire screen 13. Liquid hazardous wastes are stored in a storage tank 10, and a pump 11 pumps them through the apertures in the inlet pipe 12 into the reactor 5. Liquids or vapors—either from vaporisation or the liquids or from reaction—rise through the aluminium 6 and react completely.

In processing with molten aluminium, the temperature is at lest 660°C, which is the melting point of aluminium. Temperatures up to the boiling point of aluminium of 2 450°C are readily used. Preferably, the temperature ranges from 680°C to about 2 300°C and very preferably from about 780°C to about 1 100°C. The amount of molten aluminium utilized is preferably many times that needed to react with the waste being processed, e.g. 100 times or more, i.e. an amount which is in overwhelming excess.

In the processing herein, as indicated above, hydrocarbons and hydrogen can be formed. The hydrocarbons can include combustible gases such as methane, propane, acthylene and ethene. The hydrogen and gaseous hydrocarbons which are formed are readily utilize for combustion to provide the molten aluminum reactant or to provide the heating when processing with powdered aluminum.

Hazardous waste which is treated can contain one or a plurality of hazardous organic compounds.

The following specific examples illustrate the invention.

The apparatus for use in Examples II, III, IV, VII and XI is adapted for use in destroying the liquid wastes treated in these examples. In these examples, the liquid waste to be destroyed is vaporized in a preheater chamber heated by a furnace and the formed vapor is routed into a bath of molten aluminum via a deliver tube and sparger which is located in a bell reactor in a bath of molten aluminum in a crucible. The vapor passes into and reacts with the molten aluminum in the bell reactor and gaseous products of the reaction rise and leave he molten aluminum bath and accummulate at the top of the bell reactor from where they are routed by a discharge tube to the mouth of a water trap located in a reservoir for holding the water displaced from the trap by entering gas. The discharge tube is equipped with a check valve to prevent water from the trap and reservoir from syphoning into the reactor.

The apparatus for use in Examples I, V, VI, VIII, IX, X, XII and XIII is adapted for use in destroying the

7

solid wastes treated in these examples. In these examples, the solid waste to be destroyed is placed in an aluminum tube which is sealed to form a capsule and the capsule is fastened with a screw to the inside of a pipe welded to an open end of a larger pipe which is capped at the other end where it communicates with an exit pipe. The assembly is lowered into a bath of molten aluminum contained in a crucible so that the aluminum tube is immersed in the molten aluminum whereby the aluminum tube melts to expose the solid waste to the molten aluminum bath whereby reaction between the waste and the molten aluminum occurs. The gaseous products of the reaction leave the bath and the larger pipe via the exit pipe and are recovered in a water trap.

Example I

Twenty grams of a waste oxalic acid are treated and constitute the solid waste placed in the aluminum tube and processed in the apparatus for solid waste destruction described above. The aluminum bath is held at a temperature of 850°C by means of an electric furnace. The aluminum is used in an overwhelming excess over that required for this quantity of oxalic acid. Reaction occurs and produces 4,2 liters of hydrogen gas in the trap; and both carbon and aluminum oxide on the surface of the molten metal. No residual oxalic acid is found in the slag or in the trapped gas.

Example II

Seventy-four (74) grams of contaminated n-butyl alcohol from pathological preparations is vaporized and treated in the apparatus for liquid waste destruction described above. The aluminum bath is held at 850°C. The aluminum is used in an overwhelming excess over that required to react with the waste. The butyl alcohol waste reacts with the molten aluminum and is completely destroyed, producing 41,2 liters of gas, and aluminum oxide. The gas consists of a mixure of hydrogen and butene-1, with less than 1% each of butane and propene-1.

Example III

Fifty-eight (58) grams (1 mol) of waste acetone solvent is substituted for the butanol in Example II and reacts with the molten aluminum. No trace of acetone could be found in any of the reaction products. The reaction produces 18.3 liters of gas, consisting of 82% methyl acetylene (propyne-1), and 7% 2,3-dimethylbutene-2, and minor quantities of other unidentified gases.

Example IV

Sixty (60) grams of waste formaldehyde (embalming fluid) is substituted for the n-butanol in Example II and reacts with the molten aluminum. Less than 0,01% of the total is found in the water in the vapor trap. Hydrogen gas is formed, (41,7 liters), leaving carbon and aluminum oxide on the surface of the molten metal.

Example V

Forty-six (46) grams (1 mo) of waste diethyl ether from fat extractions is substituted for the butanol in Example I, with the result that the ether is destroyed and 64,4 liters of gaseous product is formed. The gas consists of 98% hydrogen and about 1% each of methane and ethane.

Example VI

Waste dimethyl phthalate (19,4 grams) from a polyester resin formulatio is substituted for the oxalic acid in Example I, with the result that the dimethyl phthalate is destroyed, producing 10,1 liters of gas, comprising 35% acetylene and 63% hydrogen. The water trap also contains dissolved acetylene, but no dimethyl phthalate is detected in any of the products.

Example VII

A 41 ml sample of waste acetonitrile used in preparation of thin-layer chromatographic samples is substituted for the butanol in Example II. The acetonitrile is completely destroyed, producing 31,3 liters of hydrogen gas with a trace of a higher molecular weight hydrocarbon gas believed to be butyne-2. Both slag and metal yield ammonia when treated with caustic.

Example VIII

Thirteen (13) grams of naphthylamine which is too impure for use in chemical synthesis is substituted for the oxalic acid in Example I. The naphthylamine is destroyed, producing 9,2 liters of gas comprising 62% acetylene and 34% hydrogen. Treatment of the slag with water produces ammonia gas. A sample of the molten metal is dissolved in acid and the resulting solution made alkaline with sodium hydroxide; upon mild heating, ammonia evolves from the solution.

Example IX

Seventy-six (76) grams (1 mol) of used carbon disulfide from pesticide sample dilutions is substituted for the butanol in Example I. The carbon disulfide is completely destroyed. No gas is formed. Both slag and metal emit the characteristic odor of hydrogen sulfide when exposed to atmospheric moisture.

Example X

Waste tri-n-octyl phosphine oxide (19,3 g) left over from a research project, is substituted for the oxalic acid in Example 1. The tri-n-octyl phosphine oxide is completely destroyed, yielding 4,8 liters of gas, comprising 33% hydrogen and 66% propene-1. Both the slag and a sample of the metal yield phosphine when treated with acid.

Example XI

A mixture containing contaminated methyl benzene sulfonate and ethyl benzene sulfonate is destroyed by distilling 91 grams of the mixture and passing the vapor through molten aluminum as in Example II. The sulfonates are completely destroyed, producing 21,7 liters of gas comprising ethylene, acetylene and hydrogen. The slag contains aluminum oxide, aluminum sulfide and carbon.

Example XII

Waste p-nitrophenol (13,9 g) is immersed in molten aluminum as in Example I. Reaction occurs to produce 5,5 liters of gas which is 80% acetylene and 20% hydrogen. The slag contains carbon and releases ammonia upon treatment with 10% caustic solution, demonstrating complete reduction of the nitro group, and destruction of the p-nitrophenol. Tests for phenols in the slag, aluminum, watertrap and gas indicate below 1 part per million.

Example XIII

Twenty (20) grams of a polyglycol ester of phosphoric acid (a waste detergent) is substituted for oxalic acid in Example I, with the result that it is completely decomposed, forming 11,5 liters of a mixture of ethylene and acetylene. No phosphate or detergent can be detected in the metal, slag, or vapor, or in the water trap. Phosphine is detected in both slag and metal samples upon adding acid, igniting the gas stream and playing the flame on a cold surface.

Example XIV

Triphehyl phosphine is immersed in molten aluminum and gaseous hydrocarbon and hydrogen evolve.

Claims

1. A process for destroying hazardous wastes containing hazardous organic compounds which contain at least one covalently bound element selected from the group consisting of oxygen, nitrogen, sulfur and/ or phosphorus, characterized by contacting such compound with molten aluminum to react wih the covalently bound element to reduce the compounds thereby destroying the compounds and forming less hazardous product.

2. A process as recited in Claim 1, wherein the temperature of the molten aluminum is up to 2 450°C.

3. A process as recited in either Claim 1 or 2, wherein the temperature of the molten aluminum is in the range of 680°C to 2 300°C.

4. A process as recited in anyone of the preceding Claims, wherein the temperature of the molten aluminum is within the range of 780°C to 1 000°C.

5. A process as recited in anyone of the preceding Claims, wherein the hazardous organic compound is contacted with molten aluminum by feeding it to beneath the free surface of same.

6. A process as recited in anyone of preceding Claims 1 to 5, wherein the hazardous organic compound is contacted with molten aluminium in a batch-type manner.

7. A process as recited in anyone of the preceding Claims, wherein the hazardous organic compound is contacted with molten aluminium in a waste of solid particles.

8. A process as recited in anyone of preceding Claims 1 to 6, wherein the hazardous organic compound is contacted with molten aluminium in a liquid waste.

9. A process as recited in anyone of the preceding Claims, wherein there is contacted with molten aluminium a hazardous organic compound containing covalently bound oxygen and being selected from the group consisting of alcohols, aldehydes, ketones, carboxylic acids, esters and ethers.

10. A process as recited in anyone of the preceding Claims, wherein there is contacted with molten aluminium a hazardous organic compound containing covalently bound nitrogen and being selected from the group consisting of nitriles and amines.

11. A process as recited in anyone of the preceding Claims, wherein there is contacted with molten aluminum a hazardous organic compound containing covalently bound sulfur and being selected from the group consisting of sulfides, thiols, thioketones, thiocarbonyls and mercaptans.

12. A process as recited in anyone of the preceding Claims, wherein there is contacted with molten aluminum a hazardous organic compound containing covalently bound phosphorus and being a phosphine.

13. A process as recited in anyone of the preceding Claims, wherein there is contacted with molten aluminum a hazardous organic compound containing both covalently bound oxygen and covalently bound nitrogen and being selected from the group consisting of nitro compounds, nitroso compounds, amides,

EP 0 198 949 B1

oximes, amino alcohols and amino acids.

14. A process as recited in anyone of the preceding Claims, wherein there is contacted with molten aluminum a hazardous organic compound containing both covalently bound suflur and covalently bound oxygen and being selected from the group consisting of sulfonic acids, sulfonates, thiols and sulfones.

15. A process as recited in anyone of the preceding Claims, wherein there is contacted with molten aluminum a hazardous organic compound containing both covalently bound oxygen and covalently bound phosphorus and being selected from the group consisting of phosphates, phosphonates and phosphine oxides.

16. A process as recited in anyone of the preceding Claims, wherein there is contacted with molten aluminum a hazardous organic compound containing covalently bound sulfur and covalently bound nitrogen and being selected from the group consisting of thioamides and amino thiols.

17. A process as recited in anyone of the preceding Claims, wherein there is contacted with molten aluminum a hazardous organic compound additionally containing halogen.

18. A process as recited in one anyone of the preceding Claims, wherein there is contacted with molten aluminum a hazardous organic compound containing covalently bound oxygen, nitrogen and sulfur.

19. A process as recited in anyone of the preceding Claims, wherein there is contacted with molten aluminum a hazardous organic compound containing covalently bound oxygen, sulfur and phosphorus.

20. A process as recited in anyone of the preceding Claims, wherein there is contacted with molten aluminum a hazardous organic compound containing covalently bound nitrogen, phosphorus and oxygen.

21. A process as recited in anyone of the preceding Claims, wherein there is contacted with molten aluminum a hazardous oranic compound containing covalently bound oxygen, nitrogen, phosphorus and sulfur.

22. Installation for the performance of the process according to anyone of the preceding Claims, characterized by a solid waste receiving hopper (1), a horizontal screw conveyor (2) connecting the receiving hopper (1) with a feed hopper (3), a reactor (5) containing a bath of molten aluminum, a vertical screw conveyor (4) feeding the waste downward through an open tube which has its terminus near the bottom of the reactor (5), a liquid waste storage tank (10) connected with the reactor (5) by a pipe (12) charged by a pump (11) and introduced in the reactor and having there apertures, a water trap (7) the bottomside of which is connected with the head region of the reactor (5) by a pipe (23) and the head region of the water trap (7) being connected to an outlet leading to a fire screen (13) and/or a pressure tank (9) preferably charged by a compressor (8).

**Patentansprüche**

1. Verfahren zur Vernichtung gefährlicher Abfälle, welche gefährliche organische Verbindungen enthalten, die mindestens ein kovalent gebundenes Element aus der aus Sauerstoff, Stickstoff, Schwefel und/oder Phosphor bestehenden Gruppe enthält, dadurch gekennzeichnet, daß diese Verbindung mit geschmolzenem Aluminium so in Kontakt gebracht wird, daß dieses mit dem kovalent gebundenen Element so reagiert, daß die Verbindungen reduziert und dadurch vernichtet werden und weniger gefährliches Material gebildet wird.

2. Verfahren nach Anspruch 1, dadurch gekenzeichnet, daß die Temperatur des geschmolzenen Aluminiums bis zu 2.450°C beträgt.

3. Verfahren nach Anspruch 1 oder 2, dadurch gekennzeichnet, daß die Temperatur des geschmolzenen Aluminiums im Bereich zwischen 680°C bis 2.300°C liegt.

4. Verfahren nach einem der vorhergehenden Ansprüche, dadurch gekennzeichnet, daß die Temperatur des geschmolzenen Aluminiums im Bereich zwischen 780°C und 1.000°C liegt.

5. Verfahren nach einem der vorhergehenden Ansprüche, dadurch gekennzeichnet, daß die gefährliche organische Verbindung dadurch mit geschmolzenem Aluminium in Kontakt gebracht wird, daß sie unterhalb der freien Oberfläche desselben zugeführt wird.

6. Verfahren nach einem der Ansprüche 1 bis 5, dadurch gekennzeichnet, daß die gefährliche organische Verbindung mit geschmolzenem Aluminium chargenweise in Kontakt gebracht wird.

7. Verfahren nach einem der vorhergehenden Ansprüche, dadurch gekennzeichnet, daß die gefährliche organische Verbindung mit geschmolzenem Aluminium im Zustand fester Partikel in Kontakt gebracht wird.

8. Verfahren nach einem der Ansprüche 1 bis 6, dadurch gekennzeichnet, daß die gefährliche organische Verbindung mit geschmolzenem Aluminium in flüssigem Zustand in Kontakt gebracht wird.

9. Verfahren nach einem der vorhergehenden Ansprüche, dadurch gekennzeichnet, daß mit geschmolzenem Aluminium eine kovalent gebundenen Sauerstoff enthaltende gefährliche organische Verbindung aus der aus Alkoholen, Aldehyden, Ketonen, Carboxylsäuren, Estern und Äthern bestehenden Gruppe in Kontakt gebracht wird.

10. Verfahren nach einem der vorhergehenden Ansprüche, dadurch gekennzeichnet, daß mit geschmolzenem Aluminium eine kovalent gebundenen Stickstoff enthaltende gefährliche organische Verbindung aus der aus Nitrilen und Aminen bestehenden Gruppe in Kontakt gebracht wird.

11. Verfahren nach einem der vorhergehenden Ansprüche, dadurch gekennzeichnet, daß mit geschmolzenem Aluminium eine kovalent gebundenen Schwefel enthaltende gefährliche organische

10

Verbindung aus der aus Sulfiden, Thiolen, Thioketonen, Thiocarbonylen und Mercaptanen bestehenden Gruppe in Kontakt gebracht wird.

12. Verfahren nach einem der vorhergehenden Ansprüche, dadurch gekennzeichnet, daß mit geschmolzenem Aluminium eine kovalent gebundenen Phosphor enthaltende gefährliche organische Verbindung in Kontakt gebracht wird, die ein Phosphin ist.

13. Verfahren nach einem der vorhergehenden Ansprüche, dadurch gekennzeichnet, daß mit geschmolzenem Aluminium eine sowohl kovalent gebundene Sauerstoff als auch kovalent gebundenen Stickstoff enthaltende gefährliche organische Verbindung aus der aus Nitro-Verbindungen, Nitroso-Verbindungen, Amiden, Oximen, Aminoalkoholen und Aminosäuren bestehenden Gruppe in Kontakt gebracht wird.

14. Verfahren nach einem der vorhergehenden Ansprüche, dadurch gekennzeichnet, daß mit geschmolzenem Aluminium eine sowohl kovalent gebundenen Schwefel als auch kovalent gebundenen Sauerstoff enthaltende gefährliche organische Verbindung aus der aus Sulfosäuren, Sulfonaten, Thiolen und Sulfonen bestehenden Gruppe in Kontakt gebracht wird.

15. Verfahren nach einem der vorhergehenden Ansprüche, dadurch gekennzeichnet, daß mit geschmolzenem Aluminium eine sowohl kovalent gebundenen Sauerstoff als auch kovalent gebundenen Phosphor enthaltende gefährliche organische Verbindung aus der aus Phosphaten, Phosphonaten und Phosphinoxiden bestehenden Gruppe in Kontakt gebracht wird.

16. Verfahren nach einem der vorhergehenden Ansprüche, dadurch gekennzeichnet, daß geschmolzenes Aluminium mit einer kovalent gebundenen Schwefel und kovalent gebundenen Stickstoff enthaltenden gefährlichen organischen Verbindung aus der aus Thioamiden und Aminothiolen bestehenden Gruppe in Kontakt gebracht wird.

17. Verfahren nach einem der vorhergehenden Ansprüche, dadurch gekennzeichnet, daß mit geschmolzenem Aluminium eine zusätzlich Halogen enthaltende gefährliche organische Verbindung in Kontakt gebracht wird.

18. Verfahren nach einem der vorhergehenden Ansprüche, dadurch gekennzeichnet, daß mit geschmolzenem Aluminium eine kovalent gebundenen Sauerstoff, Stickstoff und Schwefel enthaltende gefährliche organische Verbindung in Kontakt gebracht wird.

19. Verfahren nach einem der vorhergehenden Ansprüche, dadurch gekennzeichnet, daß mit geschmolzenem Aluminium eine kovalent gebundenen Sauerstoff, Schwefel und Phosphor enthaltende gefährliche organische Verbindung in Kontakt gebracht wird.

20. Verfahren nach einem der vorhergehenden Ansprüche, dadurch gekennzeichnet, daß mit geschmolzenem Aluminium eine kovalent gebundenen Stickstoff, Phosphor und Sauerstoff enthaltende gefährliche organische Verbindung in Kontakt gebracht wird.

21. Verfahren nach einem der vorhergehenden Ansprüche, dadurch gekennzeichnet, daß mit geschmolzenem Aluminium eine kovalent gebundenen Sauerstoff, Stickstoff, Phosphor und Schwefel enthaltende gefährliche organische Verbindung in Kontakt gebracht wird.

22. Vorrichtung zur Durchführung des Verfahrens nach einem der vorhergehenden Ansprüche, gekennzeichnet durch einen Aufnahmetrichter (1) für festen Abfall, einen den Aufnahmetrichter (1) mit einem Zuführtrichter (3) verbindenden horizontalen Schraubenförderer (2), einen ein Bad geschmolzenen Aluminiums enthaltenden Reaktor (5), einen den Abfall nach unten durch ein offenes Rohr, das seinen Ausgang nahe dem Boden des Reaktors (5) hat, fördernden vertikalen Schraubenförderer (4), einen mit dem Reaktor (5) durch eine über eine Pumpe (11) beschickte und in den Reaktor eingeführte und dort Öffnungen aufweisende Leitung (12) verbundenen Tank (10) zur Aufnahme flüssigen Abfalls und eine Wasserfalle (z.B. Syphon) (7), deren Bodenseite mit dem Kopfbereich des Reaktors (5) über eine Leitung (23) verbunden ist, wobei der Kopfbereich der Wasserfalle (7) an einen Auslaß angeschlossen ist, der zu einer Abfackelungsmaske (13) und/oder einem vorzugsweise über einen Kompressor (8) beschickten Drucktank (9) führt.

## Revendications

1. Procédé pour la destruction de déchets dangereux contenant des composés organiques dangereux, ceux-ci contenant au moins un élément à liaison covalente choisi parmi le groupe comprenant l'oxygène, l'azote, le soufre et/ou le phosphore, caractérisé en ce que l'on met un tel composé en contact avec de l'aluminium fondu pour le faire reagir avec l'élément à liaison covalente en vue de réduire les composés, procédé par lequel on détruit les composés et on obtient un produit moins dangereux.

2. Procédé selon la revendication 1, dans lequel la température de l'aluminium fondu va jusqu'à 2.450°C.

3. Procédé selon l'une quelconque des revendications 1 ou 2, dans lequel la température de l'aluminium fondu est comprise dans l'intervalle allant de 680°C à 2300°C.

4. Procédé selon l'une quelconque des revendications précédentes, dans lequel la température de l'aluminium fondu est comprise dans l'intervalle allant de 780°C à 1000°C.

5. Procédé selon l'une quelconque des revendications précédentes, dans lequel on met le composé organique dangereux en conact avec l'aluminium fondu en l'alimentant en-dessous de la surface libre de ce dernier.

6. Procédé selon l'une quelconque des revedications précédentes, dans lequel on met le composé organique dangereux en contact avec l'aluminium fondu selon un procédé en discontinu.

7. Procédé selon l'une quelconque des revendications précédentes, dans lequel on met le composé organique dangereux en contact avec l'aluminium fondu, à l'état de particules solides.

8. Procédé selon l'une quelconque des revendications précédentes, dans lequel on met le composé organique dangereux en contact avec l'aluminium fondu, à l'état liquide.

9. Procédé selon l'une quelconque des revendications précédentes, dans lequel on met en contact, avec l'aluminium fondu, un composé organique dangereux contenant de l'oxygène à liaison covalente, le composé étant choisi parmi le groupe comprenant les alcools, les aldéhydes, les cétones, les acides carboxyliques, les esters et les éthers.

10. Procédé selon l'une quelconque des revendications précédentes, dans lequel on met en contact, avec l'aluminium fondu, un composé organique dangereux contenant de l'azote à liaison covalente, le composé étant choisi parmi le groupe comprenant les nitriles et les amines.

11. Procédé selon l'une quelconque des revendications précédentes, dans lequel on met en contact, avec l'aluminium fondu, un composé organique dangereux contenant du soufre à liaison covalente, le composé étant choisi parmi le groupe comprenant les sulfures, les thiols, les thiocétones, les thiocarbonyles et les mercaptans.

12. Procédé selon l'une quelconque des revendications précédentes, dans lequel on met en contact, avec l'aluminium fondu, un composé organique dangereux contenant du phosphore à liaison covalente, le composé étant une phosphine.

13. Procédé selon l'une quelconque des revendications précédentes, dans lequel on met en contact, avec l'aluminium fondu, un composé organique dangereux contenant à la fois de l'oxygène à liaison covalente et de l'azote à liaison covalente, le composé étant choisi parmi le groupe comprenant les composés nitro, les composés nitroso, les amides, les oximes, les alcools aminés et les acides aminés.

14. Procédé selon l'une quelconque des revendications précédentes, dans lequel on met en contact, avec l'aluminium fondu, un composé organique dangereux contenant à la fois du soufre à liaison covalente et de l'oxygène à liaison covalente, le composé étwnt choisi parmi le groupe comprenant les acides sulfoniques, les sulfonates, les thiols et les sulfones.

15. Procédé selon l'une quelconque des revendications précédentes, dans lequel on met en contact, avec l'aluminium fondu, un composé organique dangereux contenant à la fois de l'oxygène à liaison covalente et du phosphore à liaison covalente, le composé étant choisi parmi le groupe comprenant les phosphates, les phosphonates et les oxydes de phosphines.

16. Procédé selon l'une quelconque des revendications précédentes, dans lequel on met en contact, avec l'aluminium fondu, un composé organique dangereux contenant à la fois du soufre à liaison covalente et de l'azote à liaison covalente, le composé étant choisi parmi le groupe comprenant les thioamides et les thiols aminés.

17. Procédé selon l'une quelconque des revendications précédentes, dans lequel on met en contact, avec l'aluminium fondu un composé organique dangereux contenant en plus un halogène.

18. Procédé selon l'une quelconque des revendications précédentes, dans lequel on met en contact, avec l'aluminium fondu, un composé organique dangereux contenant de l'oxygène, de l'azote et du soufre à liaison covalente.

19. Procédé selon l'une quelconque des revendications précédentes, dans lequel on met en contact, avec l'aluminium fondu, un composé organuque dangereux contenant de l'oxygène, du soufre et du phosphore à liaison covalente.

20. Procédé selon l'une quelconque des revendications précédentes, dans lequel on met en contact avec l'aluminium fondu, un composé organique dangereux contenant de l'azote, du phosphore et de l'oxygène à liaison covalente.

21. Procédé selon l'une quelconque des revendications précédentes, dans lequel on met en contact, avec l'aluminium fondu, un composé organique dangereux contenant de l'oxygène, de l'azote du phosphore et du soufre à liaison covalente.

22. Installation pour la mise en oeuvre du procédé selon l'une quelconque des revendications précédentes, caractérisé par une tremie (1) de réception de déchets solides, une transporteuse (2) horizontale à vis sans fin reliant la trèmie de réception (1) à une trémie d'alimentation (3), un réacteur (5) contenant un bain d'aluminium fondu, une transporteuse verticale (4) à vis sans fin acheminant les déchets vers le bas à travers un tube ouvert qui se termine près du fond du réacteur (5), un réservoir (10) pour l'entreposage de déchets liquides relié au réacteur (5) par un tuyau (12) alimenté par une pompe (11) et qui s'introduit dans le réacteur où il est muni d'ouvertures, un piège à eau (7) dont le fond est relié à la région de tête du réacteur (5) par un tuyau (23), et la région de tête du piège à eau (7) étant reliée à une sortie conduisant à un écran pare-feu (13) et/ou un réservoir (9) sous pression chargé, de préférence, par un compresseur (8).

## FIG. 1.